# EUROPEAN PATENT SPECIFICATION

(11) **EP 4 563 218 B1**
(45) Date of publication and mention of the grant of the patent: **25.11.2026**
(21) Application number: 24183247.6
(22) Date of filing: 20.06.2024
(51) Int. Cl.: B01F 23/53, B01F 27/192, B01F 27/271, B01F 35/93, B01F 35/90

(54) **PULP PREPARING DEVICE AND HIGH-SPEED PULPING MACHINE**
ZELLSTOFFHERSTELLUNGSVORRICHTUNG UND HOCHGESCHWINDIGKEITSAUFSCHLUSSMASCHINE
DISPOSITIF DE PRÉPARATION DE PÂTE À PAPIER ET MACHINE DE RÉDUCTION EN PÂTE À GRANDE VITESSE

(30) Priority: 29.11.2023 CN 202311622026
(43) Date of publication of application: 04.06.2025
(73) Proprietor: Guangdong Sophon Intelligent Technology Co., Ltd, Dongguan City Guangdong (CN)
(72) Inventor: DUAN, Zhen, Dongguan City (CN); LI, Linbo, Dongguan City (CN); ZHANG, Xin, Dongguan City (CN); LIANG, Dechao, Dongguan City (CN)
(74) Representative: JD&P Patent Attorneys Joanna Dargiewicz & Partners

(56) References cited:
- CN-A- 116 236 936
- CN-U- 217 042 142
- CN-U- 218 307 353
- CN-U- 219 186 701
- US-A- 4 985 208
- US-A1- 2007 159 919

## Description

### FIELD OF THE INVENTION

The present invention relates to the field of pulp preparation, and specifically relates to a pulp preparing device and a high-speed pulping machine.

### DESCRIPTION OF THE RELATED ART

At present, pulp mixing, stirring, and preparing apparatus is one of the indispensable equipment for stirring and producing pulp, in industries such as new energy, chemical industry, food, medicine, etc. Since such pulp stirring equipment requires pulp of better quality, there are stricter standards for mixing and stirring requirements, especially in solid-liquid mixed pulp stirring equipment.

In order to provide pulp with high-quality, there is a standardized process for the mixing and stirring of the pulp. Before stirring, the raw materials of solid-phase and liquid-phase are usually introduced into different cavities and pre-treated, and finally mixed and stirred in a dispersing cavity. It is common in lithium battery pulp preparation, for example, as in Chinese patent applications with publication numbers of CN217511717U, CN217189250U, andCN216964274U, the mixing of the pulp is treated under high-speed stirring, which can effectively mix the pulp to meet the required high-quality requirements. CN219186701U discloses a pulp preparing device according to the preamble of claim 1. It discloses a double-layer liquid dispersion structure and a powder-liquid mixing device, the housing is provided with a lower dispersion zone and an upper dispersion zone, the lower dispersion zone includes a lower stator and a lower rotor, the upper dispersion zone includes an upper stator and an upper rotor, the lower rotor and the upper rotor are disposed back-to-back, the rotor top plate of the lower rotor and the bottom plate of the upper rotor have an overflow channel, the bottom plate of the upper rotor is provided with a plurality of overflow holes, and the overflow holes are connected through the flow channel and the upper dispersion zone. The overflow channel between the upper and lower layers of the dispersion zone of the utility model is connected to the upper dispersion area through the overflow hole, and when the liquid passes through the overflow hole, negative pressure will be generated at the overflow hole, thereby improving the pressure difference between the inside and outside of the overflow channel, and it is more conducive to the liquid being transported from the outside to the inside under the action of the pressure difference, improving the conveying speed of the liquid in the overflow channel, improving the conveying efficiency, improving the uniformity of the distribution of the liquid, and improving the dispersion effect of the liquid.

However, in the traditional pulp mixing and stirring preparation equipment under the condition of high-speed stirring, the high-intensity friction generated in the stirring process between the stirring blade and the raw materials, and between the raw materials and the raw materials, results in a high-temperature in the stirring cavity. In this regard, it is often necessary to give consideration to the heat resistance of the raw materials, otherwise it is easy to cause activity failure of the pulp after mixing. If the heat resistance of the raw materials is considered, the types of pulp applicable to the pulp mixing and stirring preparation equipment will be limited, resulting in poor versatility.

### SUMMARY OF THE INVENTION

The present disclosure aims to overcome the shortcomings of the prior art, and provide a pulp preparing device and a high-speed pulping machine that can effectively improve the efficiency of heat-dissipation during stirring.

The purpose of the present disclosure is achieved through the following technical solutions:

A pulp preparing device, for mixing solid raw materials and liquid raw materials, comprises a pulp mixing tank and a pulp stirring assembly; the pulp mixing tank comprises a solid accommodating cavity, a liquid accommodating cavity, and a pulp dispersing cavity, which communicate with each other; the pulp mixing tank is provided with a solid feeding inlet, a liquid feeding inlet, and a pulp discharging outlet; the pulp dispersing cavity is configured to prepare pulp by stirring; the solid feeding inlet communicates with the solid accommodating cavity, for introducing solid raw materials; the liquid feeding inlet communicates with the liquid accommodating cavity, for introducing liquid raw materials or pulp; the pulp discharging outlet communicates with the solid accommodating cavity, for discharging pulp; the pulp stirring assembly comprises a pulp stirring shaft and a high-speed pulp stirring component, the pulp stirring shaft being partially disposed in the pulp mixing tank, the pulp stirring shaft being configured for connecting to a stirring drive source; the high-speed pulp stirring component is located in the pulp dispersing cavity, the high-speed pulp stirring component is connected to the pulp stirring shaft, for mixing and stirring solid raw materials and liquid raw materials to obtain pulp; the pulp preparing device comprises a stirring heat-dissipation assembly; the stirring heat-dissipation assembly comprises a first stirring heat dissipation member and a second stirring heat dissipation member; the first stirring heat dissipation member is located in the liquid accommodating cavity, so as to dissipate heat of pulp in the liquid accommodating cavity; and the second stirring heat dissipation member is located in the pulp dispensing cavity, so as to dissipate heat of pulp in the pulp dispensing cavity. The first stirring heat dissipation member is sleeved on the pulp stirring shaft, and the first stirring heat dissipation member provides a first water-cooling cavity, which is configured to be filled with cooling water.

In one embodiment, the pulp mixing tank is provided with a first liquid injection hole, which communicates with the first water-cooling cavity for cyclically injecting cooling water.

In one embodiment, the first stirring heat dispersing component comprises a first annular plate and a first heat dissipation annular cap, the first annular plate is connected to an inner wall of the pulp mixing tank, the first annular plate and the first heat dissipation annular cap are both sleeved on the pulp stirring shaft, and the first heat dissipation annular cap is mounted to the first annular plate for forming the first water-cooling cavity therebetween.

In one embodiment, the second stirring heat dissipation member is connected to an inner wall of the pulp mixing tank, and the second stirring heat dissipation member provides a second water-cooling cavity, which is configured to be filled with cooling water.

In one embodiment, the pulp mixing tank is provided with a second liquid injection hole, which communicates with the second water-cooling cavity for cyclically injecting cooling water.

In one embodiment, the second stirring heat dissipation member comprises a second annular plate and a second heat dissipation annular cap, the second annular plate is connected to an inner wall of the pulp mixing tank and contacts the high-speed pulp stirring component, the second annular plate and the second heat dissipation annular cap are both arranged around the pulp stirring shaft, and the second heat dissipation annular cap is mounted to a side of the second annular plate away from the high-speed pulp stirring component for forming the second water-cooling cavity.

In one embodiment, the high-speed pulp stirring component comprises a pulp stirring stator and a pulp stirring rotor, the pulp stirring stator is connected to the second stirring heat dissipation member, the pulp stirring rotor is connected to the pulp stirring shaft, a stirring and dispersing channel is formed between the pulp stirring rotor and the pulp stirring stator, the stirring and dispersing channel communicates with the pulp dispersing cavity, and the stirring and dispersing channel is configured for obtaining pulp by stirring solid raw materials and liquid raw materials.

In one embodiment, the pulp stirring stator comprises a plurality of stirring stator columns, the stirring stator columns are all connected to the second stirring heat dissipation member, the pulp stirring rotor comprises a rotary stirring plate and a plurality of stirring rotor columns, the rotary stirring plate is connected to the pulp stirring shaft, the stirring rotor columns are arranged on a side of the rotary stirring plate close to the second stirring heat dissipation member, and the stirring and dispersing channel is formed cooperatively by a gap between any two adjacent stirring rotor columns, a gap between any two stirring stator columns, and a gap between any adjacent stirring rotor column and stirring stator column.

A high-speed pulping machine comprises a pulp preparing device according to any above embodiment.

The present disclosure has at least the following advantages over the prior art:

Solid raw materials enter the pulp dispersing cavity through the solid feeding inlet and the solid accommodating cavity, and the liquid raw materials enter the pulp dispersing cavity through the liquid feeding inlet and the liquid accommodating cavity. The pulp stirring shaft drives the high-speed pulp stirring component to rotate at a high speed to perform high-speed stirring to the raw materials. The heat of the obtained pulp is absorbed by the first stirring heat dissipation member and the second stirring heat dissipation member, facilitating multi-level heat-dissipation of the pulp, so that the heat in the prepared pulp is quickly dissipated, and the heat-dissipation efficiency of the pulp during stirring is effectively improved.

### BRIEF DESCRIPTION OF THE DRAWINGS

In order to illustrate the technical solution of the present disclosure more clearly, a brief introduction to drawings to be used in the embodiments will be given below. It should be understood that the following accompanying drawings only show certain embodiments of the present disclosure, and therefore should not be regarded as limiting the scope. For those skilled in the art, other relevant drawings can also be obtained based on these drawings without creative efforts.
FIG 1 is a schematic diagram of a pulp preparing device in one embodiment;
FIG 2 is a sectional view of the pulp preparing device shown in FIG 1 along the A-A direction;
FIG 3 is a schematic diagram of a high-speed pulp stirring component in the pulp preparing device shown in FIG 1;
FIG 4 is a schematic diagram of a pulp preparing device in another embodiment; and
FIG 5 is a schematic diagram of a stirring magnetic component in the pulp preparing device shown in FIG 1.

### DETAILED DESCRIPTION OF PREFERRED EMBODIMENTS OF THE INVENTION

For ease of understanding this disclosure, a more comprehensive description of this disclosure will be provided with reference to the relevant drawings. The accompanying drawings present preferred embodiments of this disclosure. However, this disclosure can be implemented in many different forms and is not limited to the embodiments described in this disclosure. On the contrary, the purpose of providing these embodiments is to enhance the understanding of the disclosed content in a more comprehensive manner.

It should be noted that when a component "is fixed to another component", it can be directly on the other component or there can also be an intermediate component. When a component is described to be "connected" to another component, it may be directly attached to the other component or there may be an intermediate component. The terminology used herein, such as "vertical", "horizontal", "left", "right", and the like, is used for illustrative purposes only and is not intended to be limiting.

Unless otherwise defined, the terminologies used herein are for the purpose of describing particular embodiments only, and are not intended to be limiting of the present invention. The terminology "and/or" used herein includes any and all combinations of one or more of the listed and associated items.

The present disclosure relates to a pulp preparing device. In one embodiment, the pulp preparing device is used for mixing and stirring solid raw materials and liquid raw materials, and comprises a pulp mixing tank and a pulp stirring assembly, wherein the pulp mixing tank has a solid-accommodating cavity, a liquid-accommodating cavity, and a pulp dispersing cavity, which communicate with one another, and the pulp mixing tank is respectively provided with a solid-phase feeding port, a liquid-phase feeding port, and a pulp discharging port, the pulp dispersing cavity is used for stirring and preparing the pulp; the solid-phase feeding port is connected to the solid-accommodating cavity for introducing the solid-phase raw materials; the liquid-phase feeding port is connected to the liquid-accommodating cavity for introducing the liquid-phase raw materials or the pulp; the pulp discharging port is connected to the solid-accommodating cavity for discharging the pulp; the pulp stirring assembly comprises a pulp stirring shaft and a high-speed pulp stirring component, a portion of the pulp stirring shaft is located in the pulp mixing tank, the pulp stirring shaft is used for connecting to a stirring drive source; the high-speed pulp stirring component is located in the pulp dispersing cavity, the high-speed pulp stirring component is connected to the pulp stirring shaft for mixing and stirring the solid-phase raw materials and the liquid-phase raw materials to obtain the pulp; the pulp preparation apparatus also comprises a stirring heat-dissipation assembly, the stirring heat-dissipation assembly comprises a first stirring heat dissipation member and a second stirring heat dissipation member, the first stirring heat dissipation member is located in the liquid-accommodating cavity for dissipating heat for the pulp in the liquid-accommodating cavity; the second stirring heat dissipation member is located in the pulp dispersing cavity for dissipating heat for the pulp in the pulp dispersing cavity. The solid raw materials enter the pulp dispersing cavity through the solid-phase feeding port and the solid-accommodating cavity, the liquid-phase raw materials enter the pulp dispersing cavity through the liquid-phase feeding port and the liquid-accommodating cavity, the pulp stirring shaft drives the high-speed pulp stirring component to rotate at a high-speed for high-speed stirring of the raw materials. The heat of the obtained pulp is absorbed by the first stirring heat dissipation member and the second stirring heat dissipation member, which facilitates multi-level heat-dissipation of the pulp, so that the heat in the prepared pulp is rapidly dissipated, and the heat-dissipation efficiency of the pulp during stirring is effectively improved.

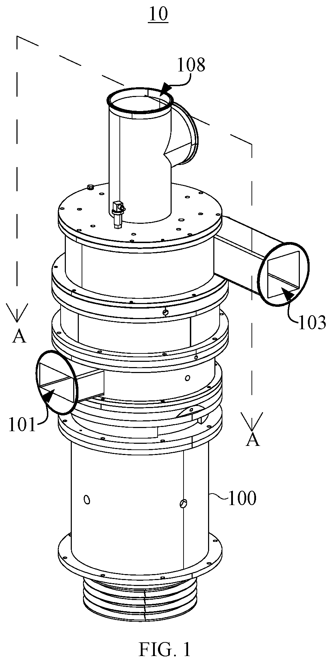

Referring to FIG 1, it is a schematic structural diagram of a pulp preparing device of an embodiment of the present disclosure.

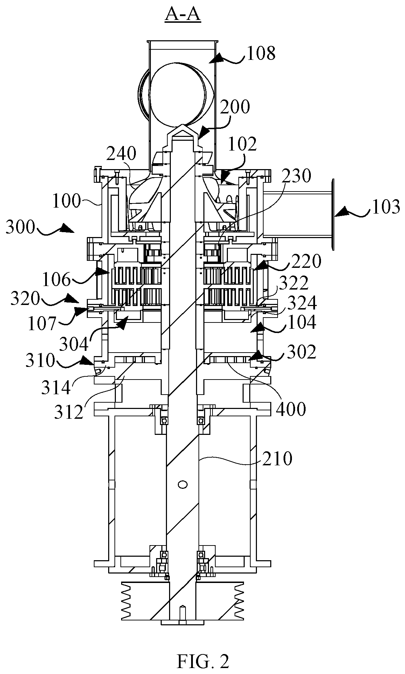

A pulp preparing device 10 of an embodiment used for mixing and stirring solid raw materials and liquid raw materials, comprises a pulp mixing tank 100. Also referring to FIG 2, the pulp mixing tank 100 provides a solid accommodating cavity 102, a liquid accommodating cavity 104 and a pulp dispersing cavity 106, which communicate with each other. The pulp mixing tank 100 is provided respectively with a solid feeding inlet 108, a liquid feeding inlet 101 and a pulp discharging outlet 103. The pulp dispersing cavity 106 is used to prepare pulp by stirring. The solid feeding inlet 108 communicates with the solid accommodating cavity 102 to introduce solid raw materials. The liquid feeding inlet 101 communicates with the solid accommodating cavity 104 to introduce liquid phase raw materials or pulp. The pulp discharging outlet 103 communicates with the solid accommodating cavity 102 to discharge pulp. The pulp preparing device 10 also includes a pulp stirring assembly 200, which includes a pulp stirring shaft 210 and a high-speed pulp stirring component 220. The pulp stirring shaft 210 is partially located in the pulp mixing tank 100, and the pulp stirring shaft 210 is used to connect with a stirring drive source. The high-speed pulp stirring component 220 is located in the pulp dispersing cavity 106, and the high-speed pulp stirring component 220 is connected to the pulp stirring shaft 210 to mix and stir the solid raw materials and the liquid raw materials to obtain the pulp. The pulp preparing device 10 also includes a stirring heat-dissipation assembly 300. The stirring heat-dissipation assembly 300 includes a first stirring heat dissipation member 310 and a second stirring heat dissipation member 320. The first stirring heat dissipation member 310 is located in the liquid accommodating cavity 104, so as to dissipate heat for the pulp in the liquid accommodating cavity 104. The second stirring heat dissipation member 320 is located in the pulp dispersing cavity 106 to dissipate heat for the pulp in the pulp dispersing cavity 106.

In the embodiment, solid raw materials enter the pulp dispersing cavity 106 through the solid feeding inlet 108 and the solid accommodating cavity 102; and liquid raw materials enter the pulp dispersing cavity 106 through the liquid feeding inlet 101 and the liquid accommodating cavity 104. The pulp stirring shaft 210 drives the high-speed pulp stirring component 220 to rotate at a high speed, so as to stir the raw materials at a high speed. Heat of the obtained pulp is absorbed by the first stirring heat dissipation member 310 and the second stirring heat dissipation member 320, which facilitates multi-level heat-dissipation of the pulp, so that the heat of the prepared pulp dissipates quickly, and the heat-dissipation efficiency of the pulp during stirring is effectively improved.

In another embodiment, the stirring drive source is an electric motor that drives the pulp stirring shaft 210 to rotate.

In another embodiment, the stirring drive source adopts a way of electromagnetic drive to provide power. For example, the pulp stirring shaft 210 acts as a rotor of an electromagnetic drive, around which electromagnetic coils serving as a stator is provided, and the pulp stirring shaft 210 is driven to rotate by the electromagnetic Lorentz force.

In one embodiment, referring to FIG 2, the first stirring heat dissipation member 310 is sleeved on the pulp stirring shaft 210. The first stirring heat-dissipation element 310 has a first water-cooling cavity 302, which is used to be filled with cooling water. In this embodiment, the first stirring heat dissipation member 310 is installed in the liquid accommodating cavity 104. In an initial period of pulp preparation, the liquid accommodating cavity 104 accommodates liquid raw materials introduced through the liquid feeding inlet 101. The high-temperature pulp, which is formed by the liquid raw materials high-speed stirred with solid raw materials in the pulp dispersing cavity 106, is reintroduced into the liquid accommodating cavity 104 through the pulp discharging outlet 103. At this time, the first stirring heat dissipation member 310 comes into full contact with the high-temperature pulp, and the cooling water in the first water-cooling cavity 302 of the first stirring heat dissipation member 310 absorbs heat from the high-temperature pulp to lower the temperature of the pulp, avoiding failure caused by continuous temperature rise during multiple cycles of stirring.

Furthermore, the pulp mixing tank 100 is provided with a first liquid injection hole (not shown in the figures) that communicates with the first water-cooling cavity 302 to circulate cooling water. In this embodiment, the first stirring heat dissipation member 310 has a hollow structure, that is, the first water-cooling cavity 302 serves as an accommodation space for external cooling water, and the cooling water circulates rapidly within the first water-cooling cavity 302 through the first liquid injection hole on the pulp mixing tank 100. Specifically, there are two first liquid injection holes, one serving as a cooling liquid inlet and the other serving as a cooling liquid outlet, which facilitate circulating and replacing the cooling water in the first water-cooling cavity 302, so as to ensure continuous cooling and heat-dissipation of the pulp.

In another embodiment, the first stirring heat dissipation member 310 comprises a first annular plate 312 and a first heat dissipation annular cap 314. The first annular plate 312 is connected to an inner wall of the pulp mixing tank, the first annular plate 312 and the first heat dissipation annular cap 314 are both sleeved on the pulp stirring shaft 210, and the first heat dissipation annular cap 314 is mounted on the first annular plate 312 for forming the first water-cooling cavity 302 therebetween. In this embodiment, the first annular plate 312 is interlocked with the first heat dissipation annular cap 314. Specifically, a portion of the first annular plate 312 is stuck in the first heat dissipation annular cap 314, so that the first water-cooling cavity 302 is formed between the first annular plate 312 and the first heat dissipation annular cap 314, to facilitate accommodating the cooling water therein. Moreover, the first annular plate 312 and the first heat dissipation annular cap 314 are both annular structures, that is, the middle of each of the first annular plate 312 and the first heat dissipation annular cap 314 is provided with a central hole, which facilitates sleeve connection with the pulp stirring shaft 210, thereby facilitating forming the liquid accommodating cavity 104 between the first annular plate 312, the pulp stirring shaft 210, and the pulp mixing tank 100. The first annular plate 312 and the first heat dissipation annular cap 314 are both rotatably connected to the pulp stirring shaft 210, that is, the first annular plate 312 and the first heat dissipation annular cap 314 are sleeved on the pulp stirring shaft 210 in a manner that, when the pulp stirring shaft 210 rotates by itself, the first annular plate 312 and the first heat dissipation annular cap 314 do not rotate together with the pulp stirring shaft 210.

In one embodiment, referring to FIG 2, the second stirring heat dissipation member 320 is connected to the inner wall of the pulp mixing tank 100. The second stirring heat dissipation member 320 has a second water-cooling cavity 304, which is used to be filled with cooling water. In this embodiment, the second stirring heat dissipation member 320 is installed in the pulp dispersing cavity 106. In an initial period of pup preparation, the pulp dispersing cavity 106 accommodates the liquid raw materials introduced through the liquid accommodating cavity 104. The high-temperature pulp, which is formed by the liquid raw materials high-speed stirred with the solid raw materials in the pulp dispersing cavity 106, is reintroduced into the pulp dispersing cavity 106 through the pulp discharging outlet 103 and the liquid accommodating cavity 104. At this time, the second stirring heat dissipation member 320 comes into full contact with the high-temperature pulp, and the cooling water in the second water-cooling cavity 304 of the second stirring heat dissipation member 320 absorbs heat from the high-temperature pulp to lower the temperature of the pulp, avoiding failure caused by continuous temperature rise during multiple cycles of stirring.

Furthermore, the pulp mixing tank 100 is provided with a second liquid injection hole 107, which communicates with the second water-cooling cavity 304 to circulate the cooling water. In this embodiment, the second stirring heat dissipation member 320 has a hollow structure, that is, the second water-cooling cavity 304 serves as an accommodation space for external cooling water, and the cooling water circulates rapidly within the second water-cooling cavity 304 through the second liquid injection hole 107 on the pulp mixing tank 100. Specifically, there are two second liquid injection holes, one serving as a cooling liquid inlet and the other serving as a cooling liquid outlet, which facilitates circulating and replacing the cooling water in the second water-cooling cavity 304, so as to ensure continuous cooling and heat-dissipation of the pulp.

In another embodiment, the second stirring heat dissipation member 320 comprises a second annular plate 322 and a second heat dissipation annular cap 324.
The second annular plate 322 is connected to the inner wall of the pulp mixing tank 100 and also contacts the high-speed pulp stirring component 220, the second annular plate 322 and the second heat dissipation annular cap 324 are both arranged around the pulp stirring shaft 210, and the second heat dissipation annular cap 324 is mounted on a side of the second annular plate 322 away from the high-speed pulp stirring component 220, so as to form the second water-cooling cavity 304. In this embodiment, the second annular plate 322 is interlocked with the second heat dissipation annular cap 324. Specifically, a portion of the second annular plate 322 is stuck in the second heat dissipation annular cap 324, so that the second water-cooling cavity 304 is formed between the second annular plate 322 and the second heat dissipation annular cap 324, to facilitate accommodating cooling water therein. Moreover, the second annular plate 322 and the second heat dissipation annular cap 324 are both circular structures, that is, the middle of each of the second annular plate 322 and the second heat dissipation annular cap 324 is provided with a central hole, which facilitates forming a gap between the middle and the pulp stirring shaft 210, thereby facilitating forming the pulp dispersing cavity 106 between the second stirring heat dissipation member 320, the high-speed pulp stirring component 220 and the pulp stirring shaft 210.

In another embodiment, the pulp stirring assembly 200 also includes an auxiliary stirring wheel 230 sleeved on the pulp stirring shaft 210. The auxiliary stirring wheel 230 is located in the pulp dispersing cavity 106, and is used for stirring together with the high-speed pulp stirring component 220.

In another embodiment, the first stirring heat dissipation member 310 and the second stirring heat dissipation member 320 can also adopt an air-cooling way, that is, cold air is introduced into the internal cavities of the first stirring heat dissipation member 310 and the second stirring heat dissipation member 320.

In another embodiment, the first stirring heat dissipation member 310 and the second stirring heat dissipation member 320 can also be introduced with recyclable refrigerant.

In another embodiment, the pulp stirring assembly 200 also includes a solid stirring blade 240 sleeved on the pulp stirring shaft 210, the solid stirring blade 240 is located in the solid accommodating cavity 102, the solid stirring blade 240 and the pulp stirring shaft 210 form a solid stirring wheel, for stirring solid raw materials.

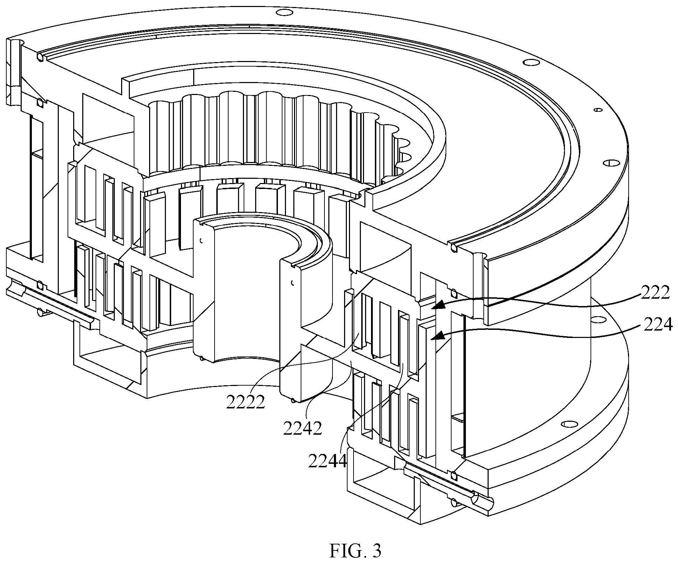

In one embodiment, referring to FIG 3, the high-speed pulp stirring component 220 comprises a pulp stirring stator 222 and a pulp stirring rotor 224, the pulp stirring stator 222 is connected to the second stirring heat dissipation member 320, the pulp stirring rotor 224 is connected to the pulp stirring shaft 210, a stirring and dispersing channel is formed between the pulp stirring rotor 224 and the pulp stirring stator 222, the stirring and dispersing channel communicates with the pulp dispersing cavity 106, and the stirring and dispersing channel is used for obtaining pulp by stirring solid raw materials and liquid raw materials. In this embodiment, the pulp stirring rotor 224 is installed on the pulp stirring shaft 210, and the pulp stirring rotor 224 rotates with the pulp stirring shaft 210 as the central axis, that is, the pulp stirring shaft 210 drives the pulp stirring rotor 224 to rotate, so that the pulp stirring rotor 224 has a displacement relative to the pulp stirring stator 222, therefor generating relative movement between the pulp stirring stator 222 and the pulp stirring rotor 224, which provides repeated friction and compression to the raw materials between the pulp stirring stator 222 and the pulp stirring rotor 224 to obtain the required pulp by stirring. The stirring and dispersing channel is a moving gap between the pulp stirring rotor 224 and the pulp stirring stator 222, which is used to accommodate the raw materials to be stirred. Through the high-speed rotation of the pulp stirring rotor 224, the raw materials are quickly stirred with the required stirring strength.

Further, the pulp stirring stator 222 includes a plurality of stirring stator columns 2222, and the stirring stator columns 2222 are all connected to the second stirring heat dissipation member 320. The pulp stirring rotor 224 includes a rotary stirring plate 2242 and a plurality of stirring rotor columns 2244, the rotary stirring plate 2242 is connected to the pulp stirring shaft 210, and the stirring rotor columns 2244 are provided on a side of the rotary stirring plate 2242 close to the second stirring heat dissipation member 320. The stirring and dispersing channel is formed cooperatively by a gap between any two adjacent stirring rotor columns 2244, a gap between any two stirring stator columns 2222, and a gap between any adjacent stirring rotor column 2244 and stirring stator column 2222. In this embodiment, the stirring stator columns 2222 are evenly distributed on the second stirring heat dissipation member 320. Specifically, there are multiple sets of stator columns distributed around the pulp mixing shaft 210 on the second annular plate 322, the distance between two adjacent stirring stator columns 2222 in each set of stator columns is equal, and the gap between any two adjacent stirring stator columns 2222 is part of the stirring and dispersing channel. The stirring rotor columns 2244 are evenly distributed on the rotary stirring plate 2242. Specifically, there are multiple sets of rotor columns distributed around the pulp stirring shaft 210 on the rotary stirring plate 2242, the distance between two adjacent stirring rotor columns 2244 in each set of rotor columns is equal, and the gap between any two adjacent stirring rotor columns 2244 is part of the stirring and dispersing channel. Moreover, the gap between any adjacent stirring rotor column 2244 and stirring stator column 2222 is also part of the stirring and dispersing channel. With this arrangement, the stirring time and stirring strength of the pulp on the high-speed pulp stirring component 220 can be greatly improved, so as to improve the quality of the prepared pulp.

In another embodiment, multiple sets of rotor columns and multiple sets of stator columns are nested with each other, which further increases the stirring contact area of the pulp, so as to more fully stir the pulp.

In another embodiment, both sides of the rotary stirring plate 2242 are respectively provided with multiple sets of rotor columns. Likewise, both sides of the rotary stirring plate 2242 are each provided with one such second stirring heat dissipation member 320, and each second stirring heat dissipation member 320 is provided with multiple sets of stator columns, which effectively improves the stirring efficiency. The speed of the pulp stirring rotor 224 can reach 3000r/min to 6000r/min.

In the actual production and preparation process of the pulp, raw materials enter the pulp dispersing cavity 106 through the corresponding feeding inlets, and pulp with certain fluidity and viscosity is formed by the raw materials under the high-speed stirring of the high-speed pulp stirring component 220. After the initial stirring, the pulp enters the pulp dispersing cavity 106 again through the pulp discharging outlet 103 and the liquid feeding inlet 101, so as to cyclically stir the pulp, for greatly improving the quality of the pulp.

However, before the raw materials are poured into the pulp mixing tank 100, due to the quality of the raw materials or improper operation, the raw materials can be easily mixed with some metal impurities, resulting in a certain amount of metal particles in the raw materials. Especially when pouring the solid raw materials, it is easy to mix some metal impurities, such as iron powder impurities. These metal impurities will have extremely serious consequences for the pulp for food, chemical and new energy industries. For example, in the field of new energy lithium batteries, if the positive electrode pulp or the negative electrode pulp is mixed with metal particles, piercing of the separator by metal particles can easily occur, resulting in short circuit of a battery, and hence a high probability of spontaneous combustion of the battery.

In order to reduce the probability of metal mixing in the process of pulp preparation, the edge of the first stirring heat dissipation member 310 and the inner wall of the pulp mixing tank 100 are in contact with each other. Referring to FIG 2, the pulp preparing device 10 also includes a stirring magnetic component 400, the stirring magnetic component 400 is set in the first stirring heat dissipation member 310, and the magnetic force of the stirring magnetic component 400 is evenly distributed on the surface of the first stirring heat dissipation member 310 to adsorb metal in the pulp in the liquid accommodating cavity 104.

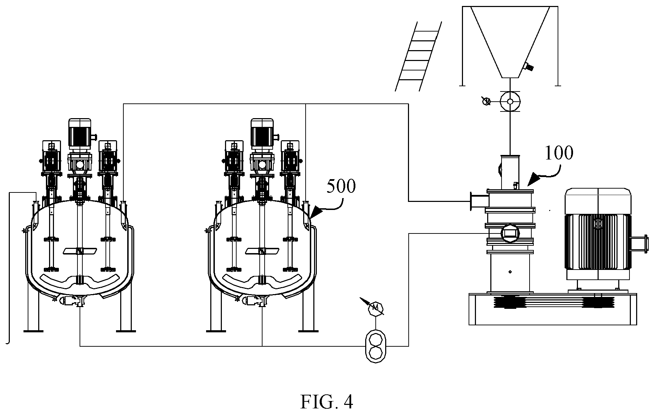

In this embodiment, after being initially mixed and stirred, the pulp enters the pulp dispersing cavity 106 again via the liquid accommodating cavity 104. Specifically, referring also to FIG 4, the pulp preparing device 10 also includes a pulp temporary storage tank 500. The pulp temporary storage tank 500 communicates with the pulp discharging outlet 103 and the liquid feeding inlet 101, respectively. The pulp temporary storage tank 500 is used to temporarily store the pulp exported from the pulp discharging outlet 103, and the pulp is re-pumped into the liquid feeding inlet 101, so that the high-speed pulp stirring component 220 can stir repeatedly in a reciprocating manner. The pulp passes through the liquid accommodating cavity 104, pulp dispersing cavity 106 and the solid accommodating cavity 102 in turn. When the pulp is in the liquid accommodating cavity 104, the pulp is in a starting cavity from which the pulp is stirred and pumped. As the pulp enters the pulp dispersing cavity 106, the fluidity of the pulp is enhanced under the high-speed stirring of the high-speed pulp stirring component 220, so that the flow rate of the pulp is gradually increased. It can be seen that, the flow rate of the pulp in the liquid accommodating cavity 104 is the slowest, the fluidity of the pulp in the liquid accommodating cavity 104 is the slowest, and the pulp passes slowly through the first stirring heat dissipation member 310. At this time, the contact time of the metal impurities in the pulp contacting the stirring magnetic component 400 increases. Moreover, the edge of the first stirring heat dissipation member 310 is in contact with the inner wall of the pulp mixing tank 100 to increase the contact area between the first stirring heat dissipation member 310 and the pulp, so that the contact time of the stirring magnetic component 400 in the first stirring heat dissipation member 310 contacting the pulp is further increased, and more metal impurities in the pulp are therefore adsorbed onto the first stirring heat dissipation member 310 to remove the metal impurities from the pulp as much as possible, thereby effectively reducing the probability of metal mixing in the pulp in the preparation process.

In another embodiment, the stirring magnetic component 400 is accommodated in the first water-cooling cavity 302 of the first stirring heat dissipation member 310. While cooling the pulp by water-cooling, it also can remove impurities by magnetic attraction, which meets the requirements of both heat-dissipation and quality improvement.

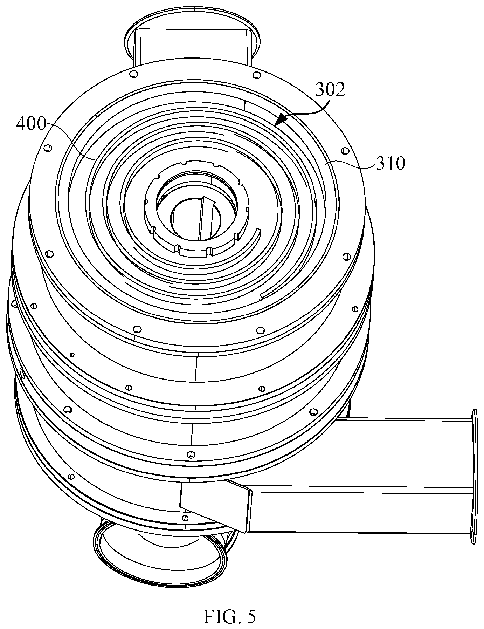

Furthermore, referring to FIG 2 and FIG 5, the stirring magnetic component 400 has a spiral structure. Specifically, the stirring magnetic component 400 includes a permanent magnet with an Archimedes spiral, the stirring magnetic components 400 are connected to the inner wall of the first stirring heat dissipation member 310, and the stirring magnetic components 400 are evenly distributed on the first stirring heat dissipation member 310 with the pulp stirring shaft 210 as the spiral center.

In this embodiment, the stirring magnetic component 400 is a permanent magnet, and the distribution pattern of the stirring magnetic components 400 is a spiral pattern, for example, an Archimedes spiral pattern. The stirring magnetic components 400 are in the first stirring heat dissipation member 310, and the distance on the spiral between any two adjacent stirring magnetic components 400 is equal, so that the stirring magnetic components 400 are evenly distributed in the first stirring heat dissipation member 310 to make the magnetic forces generated by the stirring magnetic components 400 on the first stirring heat dissipation member 310 more uniform, and hence make the magnetic field strength distribution in the liquid accommodating cavity 104 more uniform, which facilitates adhering of the magnetizable metal impurities in the pulp onto the outer surface of the first stirring heat dissipation member 310. In this way, through the spiral equidistant distribution of the stirring magnetic components 400, the magnetic adhering area and intensity in the liquid accommodating cavity 104 are increased, so that more metal impurities in the pulp can be adhered and removed, so as to further reduce the metal mixing probability of the pulp during the preparation process.

In another embodiment, the stirring magnetic component is an electromagnetic coil. After being energized, the electromagnetic field generated by the electromagnetic coil is uniformly distributed in liquid accommodating cavity, facilitating the electro-demagnetization of the pulp.

In one embodiment, the present disclosure also relates to a high-speed pulping machine comprising a pulp preparing device as described in any one of the above embodiments. In this embodiment, the pulp preparing device is used for mixing and stirring solid raw materials and liquid raw materials, and comprises a pulp mixing tank and a pulp stirring assembly, wherein the pulp mixing tank includes a solid accommodating cavity, a liquid accommodating cavity, and a pulp dispersing cavity, which communicate with each other; the pulp mixing tank is respectively provided with a solid feeding inlet, a liquid feeding inlet, and a pulp discharging outlet, the pulp dispersing cavity being used to prepare pulp by stirring; the solid feeding inlet communicates with the solid accommodating cavity, for introducing solid raw materials; the liquid feeding inlet communicates with the liquid accommodating cavity, for introducing liquid raw materials or pulp; the pulp discharging outlet communicates with the solid accommodating cavity, for discharging pulp; the pulp stirring assembly comprises a pulp stirring shaft and a high-speed pulp stirring component, the pulp stirring shaft being partially disposed in the pulp mixing tank, the pulp stirring shaft being used for connecting to a stirring drive source; the high-speed pulp stirring component is located in the pulp dispersing cavity, the high-speed pulp stirring component being connected to the pulp stirring shaft, for mixing and stirring solid raw materials and liquid raw materials to obtain pulp; the pulp preparing device also comprises a stirring heat-dissipation assembly, the stirring heat-dissipation assembly comprising a first stirring heat dissipation member and a second stirring heat dissipation member; the first stirring heat dissipation member is located in the liquid accommodating cavity, so as to dissipate heat of pulp in the liquid accommodating cavity; and the second stirring heat dissipation member is located in the pulp dispensing cavity, so as to dissipate heat of pulp in the pulp dispensing cavity. Solid raw materials enter the pulp dispersing cavity through the solid feeding inlet and the solid accommodating cavity, and the liquid raw materials enter the pulp dispersing cavity through the liquid feeding inlet and the liquid accommodating cavity. The pulp stirring shaft drives the high-speed pulp stirring component to rotate at a high speed to perform high-speed stirring to the raw materials. The heat of the obtained pulp is absorbed by the first stirring heat dissipation member and the second stirring heat dissipation member, facilitating multi-level heat-dissipation of the pulp, so that the heat of the prepared pulp is quickly dissipated, and the heat-dissipation efficiency of the pulp during stirring is effectively improved.

The above-mentioned embodiments only express several implementations of this disclosure, which are described in detail, but cannot be understood as restrictions on the scope of the present invention. It should be pointed out that for one of ordinary skill in this field, several deformations and improvements can be made . Therefore, the scope of the present invention is defined by the appended claims.

## Claims

1. A pulp preparing device (10), for mixing and stirring solid raw materials and liquid raw materials, comprising a pulp mixing tank (100) and a pulp stirring assembly (200); the pulp mixing tank (100) comprising a solid accommodating cavity (102), a liquid accommodating cavity (104), and a pulp dispersing cavity (106), which communicate with each other; the pulp mixing tank (100) being provided with a solid feeding inlet, a liquid feeding inlet, and a pulp discharging outlet; the pulp dispersing cavity (106) being configured to prepare pulp by stirring; the solid feeding inlet communicating with the solid accommodating cavity (102), for introducing solid raw materials; the liquid feeding inlet communicating with the liquid accommodating cavity (104), for introducing liquid raw materials or pulp; the pulp discharging outlet communicating with the solid accommodating cavity (102), for discharging pulp; the pulp stirring assembly (200) comprising a pulp stirring shaft (210) and a high-speed pulp stirring component, the pulp stirring shaft (210) being partially disposed in the pulp mixing tank (100), the pulp stirring shaft (210) being configured for connecting to a stirring drive source; the high-speed pulp stirring component being located in the pulp dispersing cavity (106), the high-speed pulp stirring component being connected to the pulp stirring shaft (210), for mixing and stirring solid raw materials and liquid raw materials to obtain pulp;
wherein:
the pulp preparing device comprises a stirring heat-dissipation assembly (300);
the stirring heat-dissipation assembly comprises a first stirring heat dissipation member (310) and a second stirring heat dissipation member (320); the first stirring heat dissipation member is located in the liquid accommodating cavity (104), so as to dissipate heat of pulp in the liquid accommodating cavity (104); and the second stirring heat dissipation member (320) is located in the pulp dispersing cavity (106), so as to dissipate heat of pulp in the pulp dispersing cavity (106);
**characterized in that** the first stirring heat dissipation member (310) is sleeved on the pulp stirring shaft (210), and the first stirring heat dissipation member (310) provides a first water-cooling cavity (302), which is configured to be filled with cooling water.

2. The pulp preparing device according to claim 1, **characterized in that** the pulp mixing tank (100) is provided with a first liquid injection hole, which communicates with the first water-cooling cavity (302) for cyclically injecting cooling water.

3. The pulp preparing device according to claim 1, **characterized in that** the first stirring heat dispersing component comprises a first annular plate (312) and a first heat dissipation annular cap (314), the first annular plate (312) is connected to an inner wall of the pulp mixing tank (100), the first annular plate (312) and the first heat dissipation annular cap (314) are both sleeved on the pulp stirring shaft (210), and the first heat dissipation annular cap (314) is mounted onto the first annular plate (312) for forming the first water-cooling cavity (302) therebetween.

4. The pulp preparing device according to claim 1, **characterized in that** the second stirring heat dissipation member (320) is connected to an inner wall of the pulp mixing tank (100), and the second stirring heat dissipation member (320) provides a second water-cooling cavity (304), which is configured to be filled with cooling water.

5. The pulp preparing device according to claim 4, **characterized in that** the pulp mixing tank (100) is provided with a second liquid injection hole (107), which communicates with the second water-cooling cavity (304) for cyclically injecting cooling water.

6. The pulp preparing device according to claim 4, **characterized in that** the second stirring heat dissipation member (320) comprises a second annular plate (322) and a second heat dissipation annular cap (324), the second annular plate (322) is connected to an inner wall of the pulp mixing tank (100) and contacts the high-speed pulp stirring component (220), the second annular plate (322) and the second heat dissipation annular cap (324) are both arranged around the pulp stirring shaft (210), and the second heat dissipation annular cap (324) is mounted to a side of the second annular plate (322) away from the high-speed pulp stirring component (220) for forming the second water-cooling cavity (304).

7. The pulp preparing device according to claim 6, **characterized in that** the high-speed pulp stirring component (220) comprises a pulp stirring stator (222) and a pulp stirring rotor (224), the pulp stirring stator (222) is connected to the second stirring heat dissipation member (320), the pulp stirring rotor (224) is connected to the pulp stirring shaft (210), a stirring and dispersing channel is formed between the pulp stirring rotor (224) and the pulp stirring stator (222), the stirring and dispersing channel communicates with the pulp dispersing cavity (106), and the stirring and dispersing channel is configured for obtaining pulp by stirring solid raw materials and liquid raw materials.

8. The pulp preparing device according to claim 7, **characterized in that** the pulp stirring stator (222) comprises a plurality of stirring stator columns (2222), the stirring stator columns (2222) are all connected to the second stirring heat dissipation member (320), the pulp stirring rotor (224) comprises a rotary stirring plate (2242) and a plurality of stirring rotor columns (2222), the rotary stirring plate (2242) is connected to the pulp stirring shaft (210), the stirring rotor columns (2222) are arranged on a side of the rotary stirring plate (2242) close to the second stirring heat dissipation member (320), and the stirring and dispersing channel is formed cooperatively by a gap between any two adjacent stirring rotor columns (2242), a gap between any two stirring stator columns (2222), and a gap between any adjacent stirring rotor column (2242) and stirring stator column (2222).

9. A high-speed pulping machine **characterized by** comprising a pulp preparing device according to any one of claims 1 to 8.

## Patentansprüche

1. Pulpenherstellungsvorrichtung (10) zum Mischen von festen Rohmaterialien und flüssigen Rohmaterialien, umfassend einen Pulpenmischtank (100) und eine Pulpenrührbaugruppe (200); wobei der Pulpenmischtank (100) einen Feststoffaufnahmehohlraum (102), einen Flüssigkeitsaufnahmehohlraum (104) und einen Pulpendispersionshohlraum (106) umfasst, die miteinander in Verbindung stehen; wobei der Pulpenmischtank (100) mit einem Feststoffzufuhreinlass, einem Flüssigkeitszufuhreinlass und einem Pulpenabgabeauslass versehen ist; wobei der Pulpendispersionshohlraum (106) dazu ausgestaltet ist, durch Rühren Pulpe herzustellen; wobei der Feststoffzufuhreinlass mit dem Feststoffaufnahmehohlraum (102) in Verbindung steht, um feste Rohmaterialien einzuleiten; wobei der Flüssigkeitszufuhreinlass mit dem Flüssigkeitsaufnahmehohlraum (104) in Verbindung steht, um flüssige Rohmaterialien oder Pulpe einzuleiten; wobei der Pulpenabgabeauslass mit dem Feststoffaufnahmehohlraum (102) in Verbindung steht, um Pulpe abzulassen; wobei die Pulpenrührbaugruppe (200) eine Pulpenrührwelle (210) und eine Hochgeschwindigkeitspulpenrührkomponente umfasst, wobei die Pulpenrührwelle (210) teilweise im Pulpenmischtank (100) angeordnet ist, wobei die Pulpenrührwelle (210) zum Verbinden mit einer Rührantriebsquelle ausgestaltet ist; wobei die Hochgeschwindigkeitspulpenrührkomponente im Pulpendispersionshohlraum (106) angeordnet ist, wobei die Hochgeschwindigkeitspulpenrührkomponente mit der Pulpenrührwelle (210) verbunden ist, um die festen Rohmaterialien und die flüssigen Rohmaterialien zu mischen und zu rühren, um Pulpe zu erlangen;
wobei die Pulpenherstellungsvorrichtung eine Rührwärmeableitungsringbaugruppe (300) umfasst;
wobei die Rührwärmeableitungsringbaugruppe ein erstes Rührwärmeableitungselement (310) und ein zweites Rührwärmeableitungselement (320) umfasst; das erste Rührwärmeableitungselement in dem Flüssigkeitsaufnahmehohlraum (104) angeordnet ist, um Wärme von Pulpe in dem Flüssigkeitsaufnahmehohlraum (104) abzuleiten; und das zweite Rührwärmeableitungselement (320) in dem Pulpendispersionshohlraum (106) angeordnet ist, um Wärme von Pulpe in dem Pulpendispersionshohlraum (106) abzuleiten;
**dadurch gekennzeichnet, dass** das erste Rührwärmeableitungselement (310) auf die Pulpenrührwelle (210) gesetzt ist und das erste Rührwärmeableitungselement (310) einen erste Wasserkühlungshohlraum (302) bereitstellt, der zum Füllen mit Kühlwasser ausgestaltet ist.

2. Pulpenherstellungsvorrichtung nach Anspruch 1, **dadurch gekennzeichnet, dass** der Pulpenmischtank (100) mit einem ersten Flüssigkeitseinspritzloch versehen ist, das mit dem ersten Wasserkühlungshohlraum (302) in Verbindung steht, um Kühlwasser zyklisch einzuspritzen.

3. Pulpenherstellungsvorrichtung nach Anspruch 1, **dadurch gekennzeichnet, dass** die erste Rührwärmeableitungsringkomponente eine erste ringförmige Platte (312) und eine erste Wärmeableitungsringkappe (314) umfasst, wobei die erste ringförmige Platte (312) mit einer Innenwand des Pulpenmischtanks (100) verbunden ist, die erste ringförmige Platte (312) und die erste Wärmeableitungsringkappe (314) beide auf die Pulpenrührwelle (210) gesetzt sind und die erste Wärmeableitungsringkappe (314) an der ersten ringförmigen Platte (312) angebracht ist, um einen ersten Wasserkühlungshohlraum (302) dazwischen zu bilden.

4. Pulpenherstellungsvorrichtung nach Anspruch 1, **dadurch gekennzeichnet, dass** das zweite Rührwärmeableitungselement (320) mit einer Innenwand des Pulpenmischtanks (100) verbunden ist und das zweite Rührwärmeableitungselement (320) einen zweiten Wasserkühlungshohlraum (304) bereitstellt, der zum Füllen mit Kühlwasser ausgestaltet ist.

5. Pulpenherstellungsvorrichtung nach Anspruch 4, **dadurch gekennzeichnet, dass** der Pulpenmischtank (100) mit einem zweiten Flüssigkeitseinspritzloch (107) versehen ist, das mit dem zweiten Wasserkühlungshohlraum (304) in Verbindung steht, um Kühlwasser zyklisch einzuspritzen.

6. Pulpenherstellungsvorrichtung nach Anspruch 4, **dadurch gekennzeichnet, dass** das zweite Rührwärmeableitungselement (320) eine zweite ringförmige Platte (322) und eine zweite Wärmeableitungsringkappe (324) umfasst, wobei die zweite ringförmige Platte (322) mit einer Innenwand des Pulpenmischtanks (100) verbunden ist und mit der Hochgeschwindigkeitspulpenrührkomponente (220) in Kontakt steht, die zweite ringförmige Platte (322) und die zweite Wärmeableitungsringkappe (324) jeweils um die Pulpenrührwelle (210) herum angeordnet sind und die zweite Wärmeableitungsringkappe (324) an einer Seite der zweiten ringförmigen Platte (322) angebracht ist, die von der Hochgeschwindigkeitspulpenrührkomponente (220) entfernt ist, um den zweiten Wasserkühlungshohlraum (304) zu bilden.

7. Pulpenherstellungsvorrichtung nach Anspruch 6, **dadurch gekennzeichnet, dass** die Hochgeschwindigkeitspulpenrührkomponente (220) einen Pulpenrührstator (222) und einen Pulpenrührrotor (224) umfasst, wobei der Pulpenrührstator (222) mit dem zweiten Rührwärmeableitungselement (320) verbunden ist, der Pulpenrührrotor (224) mit der Pulpenrührwelle (210) verbunden ist, ein Rühr- und Dispersionskanal zwischen dem Pulpenrührrotor (224) und dem Pulpenrührstator (222) gebildet ist, das Rühr- und Dispersionskanal mit dem Pulpendispersionshohlraum (106) in Verbindung steht und der Rühr- und Dispersionskanal dazu ausgestaltet ist, Pulpe durch Rühren von festen Rohmaterialien und flüssigen Rohmaterialien zu erlangen.

8. Pulpenherstellungsvorrichtung nach Anspruch 7, **dadurch gekennzeichnet, dass** der Pulpenrührstator (222) eine Vielzahl von Rührstatorsäulen (2222) umfasst, wobei die Rührstatorsäulen (2222) jeweils mit dem zweiten Rührwärmeableitungselement (320) verbunden sind, der Pulpenrührrotor (224) eine rotierende Rührplatte (2242) und eine Vielzahl von Rührrotorsäulen (2222) umfasst, wobei die rotierende Rührplatte (2242) mit der Pulpenrührwelle (210) verbunden ist, wobei die Rührrotorsäulen (2222) auf einer Seite der rotierenden Rührplatte (2242) nahe dem zweiten Rührwärmeableitungselement (320) angeordnet sind und der Rühr- und Dispersionskanal zusammenwirkend durch einen Spalt zwischen beliebigen zwei benachbarten Rührrotorsäulen (2242), einen Spalt zwischen beliebigen zwei Rührstatorsäulen (2222) und einen Spalt zwischen beliebigen benachbarten von Rührrotorsäule (2242) und Rührstatorsäule (2222) gebildet ist.

9. Hochgeschwindigkeitsaufschlussmaschine, **dadurch gekennzeichnet, dass** sie die Pulpenherstellungsvorrichtung nach einem der Ansprüche 1 bis 8 umfasst.

## Revendications

1. Un dispositif de préparation de pulpe (10), pour mélanger et malaxer des matières premières solides et liquides, comprenant un réservoir de mélange de pulpe (100) et un ensemble de mélange de pulpe (200) ; le réservoir de mélange de pulpe (100) comprenant une cavité d'accueil de solide (102), une cavité d'accueil de liquide (104) et une cavité de dispersion de pulpe (106), qui communiquent entre elles ; le réservoir de mélange de pulpe (100) étant doté d'une entrée d'alimentation de solide, d'une entrée d'alimentation de liquide et d'une sortie d'évacuation de pulpe ; la cavité de dispersion de pulpe (106) étant configurée pour préparer la pulpe par brassage ; l'entrée d'alimentation de solide communiquant avec la cavité d'accueil de solide (102) pour introduire des matières premières solides ; l'entrée d'alimentation de liquide communiquant avec la cavité d'accueil de liquide (104) pour introduire des matières premières liquides ou de la pulpe ; la sortie d'évacuation de pulpe communiquant avec la cavité d'accueil de solide (102) pour l'évacuation de la pulpe ; l'ensemble de brassage de pulpe (200) comprenant un arbre de brassage de pulpe (210) et un composant de brassage de pulpe à grande vitesse, l'arbre de brassage de pulpe (210) étant partiellement disposé dans le réservoir de mélange de pulpe (100), l'arbre de brassage de pulpe (210) étant configuré pour être connecté à une source d'entraînement de brassage ; le composant de brassage à grande vitesse étant situé dans la cavité de dispersion de la pulpe (106), le composant de brassage à grande vitesse étant relié à l'arbre de brassage de pulpe (210), pour mélanger et brasser les matières premières solides et liquides pour obtenir la pulpe ;
dans lequel le Dispositif de préparation de pulpe comprend un ensemble de dissipation de chaleur de brassage (300) ;
l'ensemble de dissipation de chaleur de brassage comprend un premier élément de dissipation de chaleur de brassage (310) et un deuxième élément de dissipation de chaleur de brassage (320) ; le premier élément de dissipation de chaleur de brassage est situé dans la cavité d'accueil de liquide (104) afin de dissiper la chaleur de la pulpe dans la cavité d'accueil de liquide (104) ; et le deuxième élément de dissipation thermique de brassage (320) est situé dans la cavité de dispersion de la pulpe (106) afin de dissiper la chaleur de la pulpe dans la cavité de dispersion de la pulpe (106) ;
**caractérisé en ce que** le premier élément de dissipation thermique de brassage (310) est manchonné sur l'arbre de brassage de pulpe (210), et le premier élément de dissipation thermique de brassage (310) fournit une première cavité de refroidissement par eau (302) configurée pour être remplie d'eau de refroidissement.

2. Dispositif de préparation de pulpe selon la revendication 1, **caractérisé en ce que** le réservoir de mélange de pulpe (100) est doté d'un premier trou d'injection de liquide qui communique avec la première cavité de refroidissement par eau (302) pour l'injection cyclique d'eau de refroidissement.

3. Dispositif de préparation de pulpe selon la revendication 1, **caractérisé en ce que** le premier composant de dispersion de chaleur de brassage comprend une première plaque annulaire (312) et un premier capuchon annulaire de dissipation thermique (314), la première plaque annulaire (312) est reliée à une paroi intérieure du réservoir de mélange de pulpe (100), la première plaque annulaire (312) et la première capsule annulaire de dissipation thermique (314) sont toutes deux manchonnées sur l'arbre de brassage de la pulpe (210), et le premier capuchon annulaire de dissipation thermique (314) est monté sur la première plaque annulaire (312) pour former la première cavité de refroidissement par eau (302) entre celles-ci.

4. Dispositif de préparation de pulpe selon la revendication 1, **caractérisé en ce que** le deuxième élément de dissipation thermique de brassage (320) est relié à une paroi intérieure du réservoir de mélange de pulpe (100), et le deuxième élément de dissipation thermique de brassage (320) fournit une deuxième cavité de refroidissement par eau (304) configurée pour être remplie d'eau de refroidissement.

5. Dispositif de préparation de pulpe selon la revendication 4, **caractérisé en ce que** le réservoir de mélange de pulpe (100) est doté d'un deuxième trou d'injection de liquide (107) qui communique avec la deuxième cavité de refroidissement par eau (304) pour injecter cycliquement de l'eau de refroidissement.

6. Dispositif de préparation de pulpe selon la revendication 4, **caractérisé en ce que** le deuxième élément de dissipation de chaleur par brassage (320) comprend une deuxième plaque annulaire (322) et un deuxième capuchon annulaire de dissipation thermique (324), la deuxième plaque annulaire (322) est reliée à une paroi intérieure du réservoir de mélange de pulpe (100) et entre en contact avec le composant de brassage de pulpe à grande vitesse (220), la deuxième plaque annulaire (322) et le deuxième capuchon annulaire de dissipation thermique (324) sont tous deux disposés autour de l'arbre de mélange de pulpe (210), et le deuxième capuchon annulaire de dissipation thermique (324) est fixé sur un côté de la deuxième plaque annulaire (322) à l'écart du composant de brassage de pulpe à haute vitesse (220) pour former la deuxième cavité de refroidissement par eau (304).

7. Dispositif de préparation de pulpe selon la revendication 6, **caractérisé en ce que** l'élément de brassage de pulpe à grande vitesse (220) comprend un stator de brassage de pulpe (222) et un rotor de brassage de pulpe (224), le stator de brassage de pulpe (222) est relié au deuxième élément de dissipation thermique (320), le rotor de brassage de pulpe (224) est relié à l'arbre de brassage de pulpe (210), un canal de brassage et de dispersion est formé entre le rotor de brassage de pulpe (224) et le stator de brassage de pulpe (222), le canal de brassage et de dispersion communique avec la cavité de dispersion de pulpe (106), et le canal de brassage et de dispersion est configuré pour obtenir la pulpe en remuant des matières premières solides et liquides.

8. Dispositif de préparation de pulpe selon la revendication 7, **caractérisé en ce que** le stator de brassage de pulpe (222) comprend une pluralité de colonnes de stator de brassage (2222), les colonnes de stator de brassage (2222) sont toutes reliées au deuxième élément de dissipation de chaleur de brassage (320), le rotor de mélange de pulpe (224) comprend une plaque rotative de brassage (2242) et une pluralité de colonnes de rotors de brassage (2222), la plaque de brassage rotative (2242) est reliée à l'arbre de brassage de pulpe (210), les colonnes de rotor de brassage (2222) sont disposées sur un côté de la plaque de brassage rotative (2242) près du deuxième élément de dissipation de chaleur (320), et le canal de brassage et de dispersion est formé de manière coopérative par un espace entre deux colonnes de rotors de brassage adjacentes (2242), un espace entre deux colonnes de stator de brassage (2222), et un espace entre une colonne de rotor de brassage adjacente (2242) et une colonne de stator de brassage (2222).

9. Machine à pulpe à grande vitesse, **caractérisée en ce qu'**elle comprend un dispositif de préparation de pulpe selon l'une des revendications 1 à 8.
